# EUROPÄISCHE PATENTSCHRIFT

(11) **EP 0 560 214 B1**
(45) Veröffentlichungstag und Bekanntmachung des Hinweises auf die Patenterteilung: **27.12.1996**
(21) Anmeldenummer: 93103516.6
(22) Anmeldetag: 05.03.1993
(51) Int. Cl.: B29C 35/04

(54) **Anlage zum Vulkanisieren von aus Kautschukmischungen hergestellten Erzeugnissen**
Apparatus for vulcanising articles made of rubber compounds
Dispositif pour la vulcanisation d'objets en mélanges de caoutchoucs

(30) Priorität: 13.03.1992 DE 4208283
(43) Veröffentlichungstag der Anmeldung: 15.09.1993
(73) Patentinhaber: PAUL TROESTER MASCHINENFABRIK, D-30519 Hannover (DE)
(72) Erfinder: Klein, Heinz, W-3017 Pattensen (DE)
(74) Vertreter: Junius, Walther, Dr.

(56) Entgegenhaltungen:
- EP-A- 0 000 111
- DE-A- 3 220 329
- DATABASE WPIL Week 8706, Derwent Publications Ltd., London, GB; AN 87-041706 & SU-A-1 237 577 (ZHDANOVTYAZHMASH)
- DATABASE WPIL Week 9305, Derwent Publications Ltd., London, GB; AN 93-043053 & SE-A-9 101 744 (KOPAL IND AB)

## Beschreibung

Die Erfindung betrifft eine Anlage zum Vulkanisieren von aus Kautschukmischungen hergestellten, vorzugsweise strangförmigen Erzeugnissen, bestehend aus einer Wanne für die Aufnahme eines Bades aus Glykol- oder Salzgemisch und einer Beheizungsvorrichtung.

Solche Anlagen sind durch den Verlauf einer Vielzahl dieser Anlagen eigener Produktion bekannt geworden.

Bei der Fertigung langer Gummiprofile wird seit vielen Jahren die kontinuierliche Vulkanisation angewendet, bei der aufgrund von Erwärmung im kontinuierlichen Durchlauf der Vernetzungsprozeß, die sogenannte Vulkanisation, erfolgt. Hierbei entsteht aus dem plastischen Kautschukmaterial durch chemische molekulare Bindungen elastischer Gummi.

Die Erwärmung in kontinuierlichen Vulkanisieranlagen für Gummiprofile erfolgt auf recht unterschiedliche Weise: Üblich sind Anlagen, die mit Heißluft, mit Infrarotstrahlung, mit Mikrowellen oder mit Flüssigkeitsbädern als Wärmeträger verschiedener Art arbeiten. Bekannt sind auch verschiedene Kombinationen dieser Beheizungsarten. Alle diese Bauarten haben ihre Vorteile und ihre Nachteile, sie haben auch ihre durch die Vorund Nachteile bedingten speziellen Einsatzgebiete.

Aus der Fachwelt bekannten chemischen Gründen ist es vielfach erforderlich, die Vulkanisation unter Sauerstoffabschluß durchzuführen, da die Profile bzw. ihre Oberflächen sonst den technischen Anforderungen nicht genügen. Hierbei haben sich Flüssigkeitsbäder bewährt, die als Medium neben gewissen Glykolarten meist Salzgemische in Anwendung bringen, die auf relativ hohen Temperaturen bis zu ca. 600°K aufgeheizt und in ihrer Temperatur geregelt werden. Die Beheizung dieser Flüssigkeitsbäder erfolgt durch elektrische Energie, z.B. Heizstäbe, welche ihre Wärme direkt in das Flüssigkeitsbad oder indirekt über die Trogwand abgeben oder bei anderen Bauarten mittels Ölwannen, welche hochbeheizbare Ölkreisläufe besitzen, und mit diesen indirekt die Schmelze erwärmen.

Diese in der Praxis bekannten Bauarten besitzen gravierende Nachteile:

Direkt elektrisch beheizte Salzbäder haben den Nachteil, daß beim Erstarren der Schmelze durch Schrumpfung die Temperaturfühler und die eingetauchten Heizstäbe bruchgefährdet sind. Man heizt deshalb auch über längere Betriebspausen mit verminderter Temperatur und überbrückt somit z.B. Wochenenden, an denen nicht gearbeitet wird, was eine Verschwendung an Energie ist.

Bei Flüssigkeitsbädern, deren Trogwandungen durch elektrische Heizstäbe beheizt werden, besteht die Gefahr, daß durch feine unvermeidliche Luftspalte zwischen den Heizstäben und der Trogwandung eine ungleichmäßige Erwärmung erfolgt, was zu Trog-Verwerfungen und auch zu Heizstabzerstörungen führen kann. Die Heizstäbe sind auch durch die ungleiche Wärmeabgabe von Anlage- und Außenseite zusätzlich gefährdet. Auch hier treten energie- und regeltechnische Nachteile auf.

Elektrisch beheizte Anlagen haben auch Probleme mit der Korrosion der Heizstäbe, der elektrischen Anschlüsse und sonstiger elektrischer Einrichtungen. Das bedingt einen hohen Reparatur-Erhaltungs- und Wartungsaufwand.

Öltemperierte Vulkanisierbäder, die diese Probleme vermeiden, haben dagegen andere Nachteile. So besitzen z.B. Ölumlaufsysteme eine große Wärmekapazität und erfordern deshalb schon beim Aufheizvorgang, aber auch im Dauerbetrieb, erhebliche Energiemengen, die nicht dem Bad zugeführt werden. Sie sind auch baulich recht teuer, da das Öl im Arbeitstemperaturbereich bis ca. 600°K schon unter einem Druck von mehreren Bar steht, was eine entsprechend schwere Anlagenbauart erfordert. Bei den verwendeten Temperierölen treten auch Dichtungsprobleme auf. Austretendes Öl ist feuergefährlich, giftig und schwer zu beseitigen, es stellt daher auch eine Umweltgefährdung dar. Der Wartungsaufwand ist bei diesen Anlagen deshalb ebenfalls recht hoch.

Für einen ganz anderen Zweck, nämlich das Aufschmelzen von eingefrorenem Ladegut eines Tank-Güterzugwagens ist es aus der SU-A-12 37 577 bekannt geworden, im unteren Teil des Tanks zwei gegenläufige Kanäle für Heißluft anzuordnen, die von einem oberhalb dieser Kanäle angeordneten beheizten Ventilator mit Heißluft beschickt werden, um im Tank eingefrorenes Ladegut für die Entladung aufzuschmelzen.

Die Erfindung vermeidet die Nachteile des Standes der Technik. Es ist die Aufgabe der Erfindung, den Heizenergiebedarf und den großen Wartungsaufwand mit einfachen Mitteln zu vermindern.

Die Erfindung besteht darin, daß der Trog an seinem Boden und an seinen Seitenwänden von mindestens einem Luftkanal umgeben ist, daß vor den Stirnseiten des Troges Luftumlenkkammern angeordnet sind und daß diese Luftkanäle und die Luftumlenkkammern Teile eines vom unter dem Boden verlaufenden Kanals und eines entlang der Seitenwand des Troges verlaufenden Kanals gebildeten Ringkanalsystems sind, in welchem mindestens ein Gebläse und Heizvorrichtungen untergebracht sind.

Bei der Beheizung des Troges für das Vulkanisationsbad mit Heißluft treten die genannten Korrosions- und Abdichtungsprobleme nicht auf. Es ist auch keine schwere druckfeste Apparatebauart erforderlich. Da mit Umluft gearbeitet wird, treten auch keine großen Energieverluste auf. Der Wartungsaufwand ist grundsätzlich wesentlich geringer als bei den herkömmlich beheizten Anlagen. Von Vorteil ist auch, daß gegebenenfalls durch separate Luftumwälzsysteme weitere spezielle Anlagenteile, wie eine Salzberieselungsanlage, ein Eintauch-Stahl-Transportband nebst dessen großen Umlenktrommeln ohne weiteres von dem gleichen Temperiermedium temperiert werden können. Darüber hinaus besteht auch die technische Möglichkeit, mit der prinzipiell geringen Abluftmenge beim Betrieb einer solchen Anlage die Salzabblasstation für die vulkanisierten Profile zu betreiben und eine Salzrückgewinnungsanlage hinter der Kühl- und Waschstation zu beheizen, wodurch wiederum an Energie gespart wird.

Die Beheizung kann mit elektrischer Energie erfolgen, sie wird aber zweckmäßigerweise mit preiswerter und umweltfreundlicher Energie, z.B. mit Erdgas oder Öl erfolgen. Dabei sind serienmäßig hergestellte reglungstechnische Installationen in preiswerter Bauart einsetzbar. setzbar. Als Umwälzgebläse stehen technisch bewährte Apparate zur Verfügung, die preiswert erhältlich sind.

Zweckmäßig ist es, wenn die Wanne an ihren Außenseiten Rippen und/oder Luftwirbel bildende Elemente aufweist, welche Wärme aus dem Heißluftstrom aufnehmen und an die Wannenwandung weitergeben.

Vorteilhaft ist es, wenn die Heizvorrichtungen im bodenseitigen Luftkanal angeordnet sind und wenn die Gebläse in den seitlichen Luftkanälen angeordnet sind. Weiter hat es sich als vorteilhaft erwiesen, wenn die Rippen mit Löchern versehen sind, wobei Beheizungskanäle ihre Wärme an die Rippen abgeben.

Aber nicht nur zur Beheizung des Troges kann die Warmluftbeheizung des Troges dienen, die Heißluft führenden Luftkanäle können auch zu weiteren Anlagenteilen führen. Diese Anlagenteile können ein Salzschmelzevorratsbehälter und/oder eine Salzberieselungsanlage und/oder ein Eintauchstahlband und/oder dessen Umlenkrollen und/oder eine Salzabblasstation sein.

Das Wesen der Erfindung ist nachstehend anhand eines in der Zeichnung schematisch dargestellten Ausführungsbeispieles näher erläutert. Es zeigen:

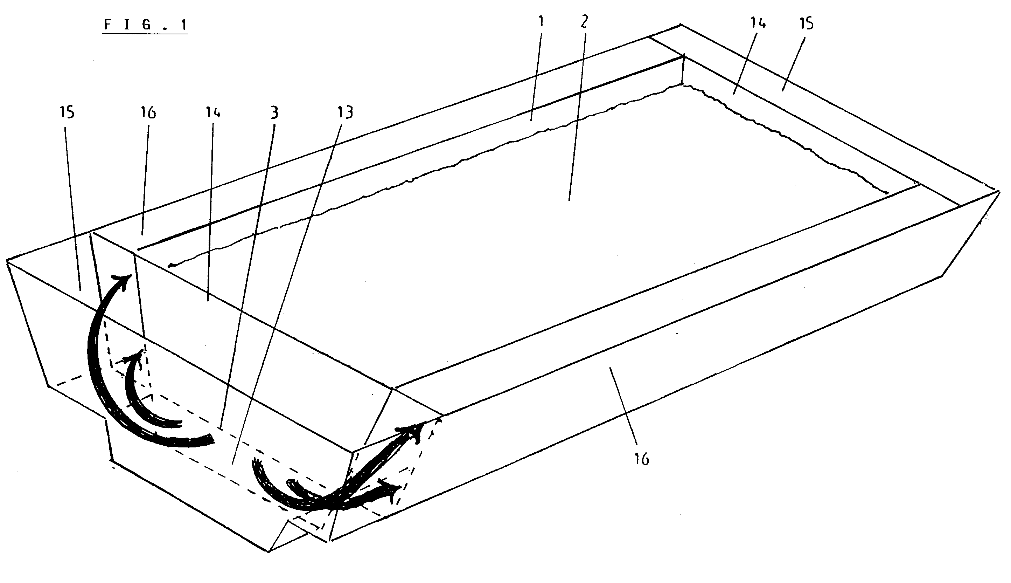

- Fig. 1: eine perspektivische Darstellung einer Vulkanisationsanlage mit einem Warmluftkreislauf, deren Warmluftringkanäle unter der Wanne und zu den Seiten der Wanne verlaufen,
- Fig. 2: einen Teil der unter dem Boden des Troges angeordneten Verrippung,
- Fig. 3: einen Querschnitt durch eine Vulkanisationsanlage mit einer Salzberieselungsanlage,
- Fig. 4: eine perspektivische Darstellung der Beheizung eines Umlenkrades des Eintauch-Stahltransportbandes,
- Fig. 5: einen Schnitt durch einen in anderer Weise mit Luftkanälen versehenen Trog.

Im Trog 1 befindet sich ein Salzbad 2, welches durch Erwärmung von unten her zu einer Schmelze verflüssigt ist. Unterhalb des Bodens 3 des Troges 1 befindet sich ein Luftkanal 13, in den vom Boden 3 des Troges her Rippen 5 hineinragen. Dieses aus dem Trog 1 und dem Ringkanal bestehende Aggregat ist in eine Wärmeisolierung eingebettet. Von oben her taucht ein Stahlband 11, welches über Umlenkrollen 12 geführt ist, in das Salzbad 2 ein, um ein Aufschwimmen der im Salzbad 2 befindlichen, nicht dargestellten, zu vulkanisierenden Profile zu vermeiden.

Der unterhalb des Bodens 3 befindliche Luftkanal 13 mündet in vor den Stirnseiten 14 des Troges 1 angeordneten Luftumlenkkammern 15. Aus diesen Luftumlenkkammern 15 gelangt die Heizluft in seitlich des Troges 1 angeordnete Luftkanäle 16, welche entlang den Seitenwänden des Troges 1 verlaufen. Somit läuft die der Beheizung des Troges 1 dienende heiße Luft in ständigem Umlauf durch den Bodenkanal 13 in eine Luftumlenkkammer 15, von dieser in die seitlich angeordneten Luftkanäle 16 und von diesen in die andere hintere Luftumlenkkammer 15 und aus dieser wieder durch den bodenseitigen Luftkanal 13. Zweckmäßigerweise sind bei dieser Ausführungsform die Heizvorrichtungen im bodenseitigen Luftkanal 13 angeordnet, während die Gebläse zweckmäßigerweise in den seitlichen Luftkanälen 16 angeordnet sind.

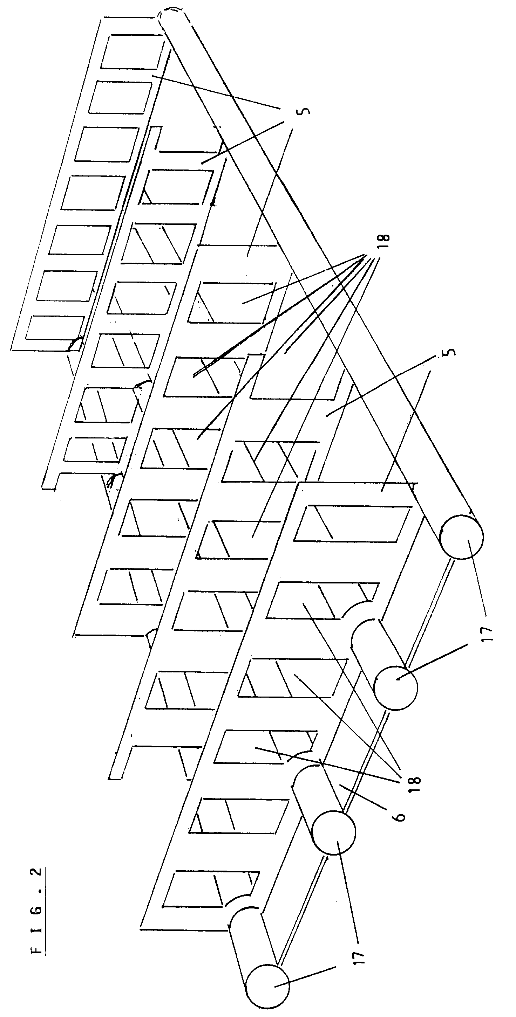

Fig. 2 zeigt eine Ausführungsform der Rippenanordnung unter dem Boden 3. In einer Wand 6 sind Beheizungskanäle 17 angeordnet, welche ihre Wärme nicht nur an den an der Wand 6 entlanglaufenden Luftstrom abgeben, sondern vor allem an die Rippen 5, welche mit Löchern 18 versehen sind. Dabei sind diese Löcher 18 zu entsprechenden Löchern der nachfolgenden Rippe 5 versetzt angeordnet. Die Oberkante der Rippen 5 ist direkt mit dem Boden 3 des Troges 1 verbunden. Auf diese Weise ändert der Luftstrom ständig seine Strömungsrichtung, es entstehen Wirbel, die Wärmeübertragung ist besonders intensiv, weil die Wärmeübertragung nicht nur über wirbelnde Heißluft erfolgt, sondern auch über Wärmeleitung durch die Rippen.

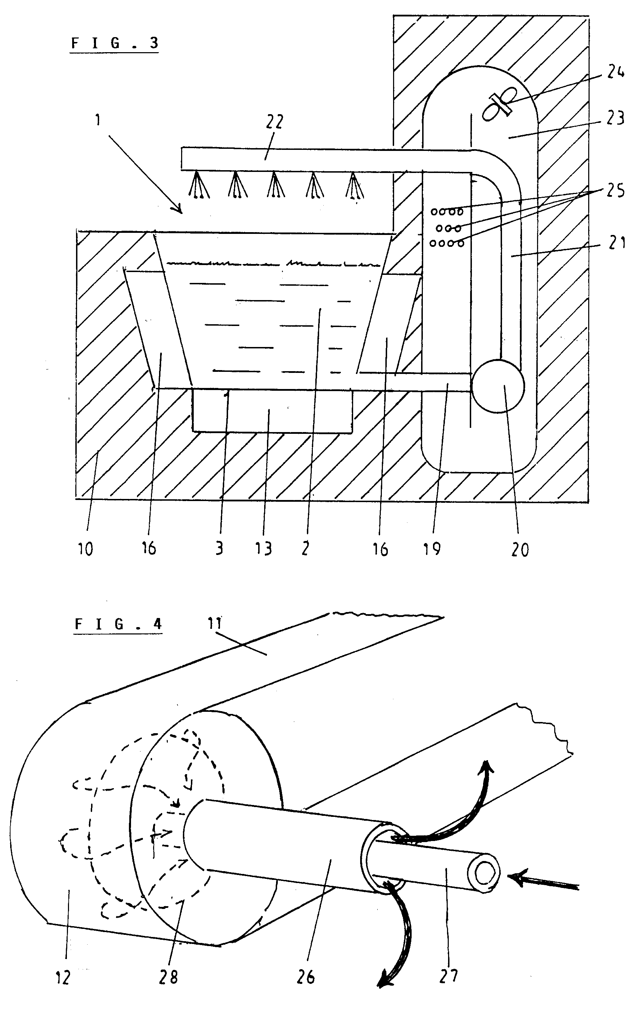

Im Ausführungsbeispiel der Fig. 3 ist im Querschnitt ein Trog 1 mit einem Bodenkanal 13 und zwei Seitenkanälen 16 dargestellt, die von einer Isolierung 10 umgeben sind. Vom Boden 3 des Troges 1 geht ein Zweigkanal 19 für die Salzschmelze zu einer Fördervorrichtung 20. Die Salzschmelze wird durch einen Kanal 21 zur Dusche 22 geführt, von wo die Salzschmelze von oben her auf das zu vulkanisierende Gut gesprüht wird. Die Kanäle 19 und 21 sowie die Fördervorrichtung 20 befinden sich in einem Ringkanal 23, welcher mit einem Gebläse 24 und Heizvorrichtungen 25 ausgestattet ist.

In Fig. 4 ist ein Umlenkrad 12 für ein Stahlband 11 dargestellt. Die das Umlenkrad 12 tragende Welle 26 ist hohl. In ihr befindet sich in konzentrischer Anordnung ein Rohr 27. Dieses Rohr 27 bildet eine Heißluftzufuhr, während der Zwischenraum zwischen dem Rohr 27 und der Welle 26 einen Ringkanal für das Herauslassen von Heißluft aus dem Umlenkrad 12 bildet. Mit der im Inneren des hohlen Umlenkrades 12 befindlichen Stirnseite des Rohres 27 ist eine Ringscheibe 28 verbunden, die gelocht sein kann und deren Außendurchmesser zweckmäßigerweise kleiner als der Innendurchmesser des Umlenkrades 12 ist.

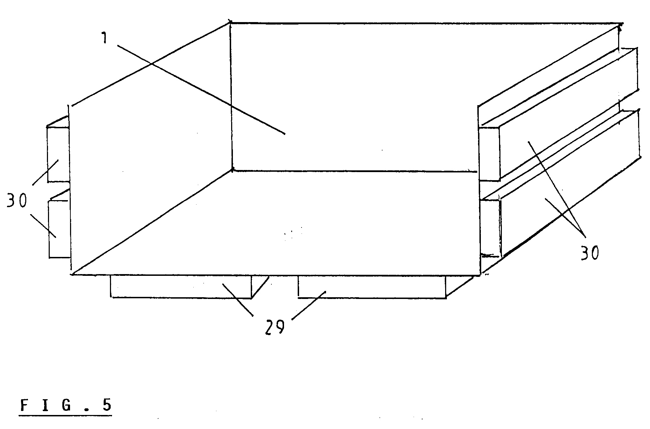

Im Ausführungsbeispiel der Fig. 5 sind die Heizkanäle 29,30 paarweise am Boden 3 und den Seitenwänden 31 des Troges 1 außen angebracht. die Kanäle sind in gemeinsame Luftumlenkstationen an den Stirnseiten des Troges geführt.

Falls kein reines Umluftsystem einsetzbar ist, kann Wärme aus der Abluft über Wärmetauscher auf die Zuluft übertragen werden.

Öl- oder Gasbrenner können auch direkt an dem Trog oder dem Ringkanal angesetzt werden.

## Patentansprüche

1. Anlage zum Vulkanisieren von aus Kautschukmischungen hergestellten, vorzugsweise strangförmigen Erzeugnissen,
bestehend aus einem Trog (1) für die Aufnahme eines Bades aus Glykol- oder Salzgemisch (2) und/oder einem anderen flüssigen Wärmeträger und einer Beheizungsvorrichtung für den Trog,
dadurch gekennzeichnet,
daß der Trog (1) an seinem Boden (3) und an seinen Seitenwänden von mindestens einem Luftkanal (13, 16) umgeben ist,
daß vor den Stirnseiten (14) des Troges (1) Luftumlenkkammern (15) angeordnet sind
und daß diese Luftkanäle (13, 16) und die Luftumlenkkammern (15) Teile eines vom unter dem Boden (3) verlaufenden Kanals (13) und eines entlang der Seitenwand des Troges (1) verlaufenden Kanals (16) gebildeten Ringkanalsystems sind,
in welchem mindestens ein Gebläse und Heizvorrichtungen untergebracht sind.

2. Anlage nach Anspruch 1,
dadurch gekennzeichnet,
daß der Trog an seinen Außenseiten Rippen (5) und/oder Luftwirbel bildende Elemente aufweist.

3. Anlage nach Anspruch 1,
dadurch gekennzeichnet,
daß die Heizvorrichtungen im bodenseitigen Luftkanal (13) angeordnet sind.

4. Anlage nach Anspruch 1,
dadurch gekennzeichnet,
daß die Gebläse in den seitlichen Luftkanälen (16) angeordnet sind.

5. Anlage nach Anspruch 1 und 2,
dadurch gekennzeichnet,
daß die Rippen (6) mit Löchern (18) versehen sind, wobei Beheizungskanäle (17) ihre Wärme an die Rippen (6) abgeben.

6. Anlage nach Anspruch 1,
dadurch gekennzeichnet,
daß Luftkanäle (23) mit Heißluft auch zu weiteren Anlagenteilen führen.

7. Anlage nach Anspuch 6,
dadurch gekennzeichnet,
daß die Anlagenteile ein Salzschmelzevorratsbehälter und/oder eine Salzberieselungsanlage (22) und/oder ein Eintauchstahlband (11) und/oder dessen Umlenkrollen (12) und/oder eine Salzabblasstation sind.

## Claims

1. Installation for vulcanisation of preferably extruded products made of rubber blends, consisting of a trough (1) for receiving a bath of glycol or salt mixture (2) and/or another liquid heat-conveying medium and a heating device for the trough, characterised in that at its bottom (3) and at its side walls the trough (1) is surrounded by at least one air duct (13, 16), in that air deflecting chambers (15) are disposed in front of the end sides (14) of the trough (1) and in that these air ducts (13, 16) and the air deflecting chambers (15) are parts of a ring duct system formed of the duct (13) running under the bottom (3) and a duct (16) running along the side wall of the trough (1), in which at least one blower and heating devices are housed.

2. Installation according to' claim 1, characterised in that on its external sides the trough exhibits fins (5) and/or elements forming air vortices.

3. Installation according to claim 1, characterised in that the heating devices are disposed in the bottom air duct (13).

4. Installation according to claim 1, characterised in that the blowers are disposed in the side air ducts (16).

5. Installation according to claim 1 and 2, characterised in that the fins (6) are provided with holes (18), and heating ducts (17) give off their heat to the fins (6).

6. Installation according to claim 1, characterised in that air ducts (23) with hot air also lead to further installation parts.

7. Installation according to claim 6, characterised in that the installation parts are a salt melt reservoir and/or a salt sprinkling installation (22) and/or a steel immersion belt (11) and/or its deflecting rollers (12) and/or a station for blowing off salt.

## Revendications

1. Installation pour la vulcanisation de produits fabriqués en mélanges de caoutchouc, de préférence, en forme de barre,
constituée par un bac (1) destine à recevoir un bain de mélange (2) de glycol ou de sel et/ou d'un autre caloporteur liquide, et par un dispositif de chauffage pour le bac,
caractérisée
en ce que le bac (1) est entouré, le long de son fond (3) et de ses parois latérales, d'au moins un canal d'air (13, 16), en ce qu'en avant des côtés frontaux (14) du bac (1) sont agencées des chambres (15) de renvoi de l'air,
et en ce que ces canaux d'air (13, 16) et les chambres de renvoi de l'air (15) font partie d'un circuit de canaux annulaires forme du canal (13) s'étendant sous le fond (3) et d'un canal (16) s'étendant le long de la paroi latérale du bac (1), et dans lequel sont agencés au moins un ventilateur et des dispositifs de chauffage.

2. Installation selon la revendication 1,
caractérisée
en ce que le bac présente sur ses côtés extérieurs des nervures (5) et/ou des éléments générateurs de tourbillons d'air.

3. Installation selon la revendication 1,
caractérisée
en ce que les dispositifs de chauffage sont agencés dans le canal d'air (13) longeant le fond.

4. Installation selon la revendication 1,
caractérisée
en ce que les ventilateurs sont agencés dans les canaux d'air latéraux (16).

5. Installation selon les revendications 1 et 2,
caractérisée
en ce que les nervures (6) sont munies de trous (18), les canaux de chauffage (17) cédant leur chaleur aux nervures (6).

6. Installation selon la revendication 1,
caractérisée
en ce que des canaux d'air (23) conduisant de l'air chaud mènent aussi à d'autres parties de l'installation.

7. Installation selon la revendication 6,
caractérisée
en ce que les parties de l'installation sont un récipient de réserve de sel fondu et/ou une installation (22) d'épandage du sel et/ou une bande d'acier immergée (11) et/ou des rouleaux de renvoi de cette bande et/ou un poste de soufflage du sel.
